# EUROPEAN PATENT APPLICATION

(11) **EP 1 610 479 A2**
(43) Date of publication of application: **28.12.2005**
(21) Application number: 05253636.4
(22) Date of filing: 13.06.2005
(51) Int. Cl.: H04H 1/00

(54) **Method of and apparatus for automatically selecting broadcast service according to physiological state of user**

(30) Priority: 11.06.2004 KR 2004043074
(71) Applicant: SAMSUNG ELECTRONICS CO., LTD., Suwon-city, Gyungki-do (KR)
(72) Inventor: Seo, Ju-hee, 108-103 Nulpuren Byucksan Apt., Suwon-si Gyeonggi-do (KR); Park, Jeong-hoon, Gwanak-gu Seoul (KR); Youm, Sun-hee, Suwon-si Gyeonggi-do (KR); Park, Sung-il, Suwon-si Gyeonggi-do (KR); Park, Ju-hee, 901-1001 Byuckjeokgol 9-danji Apt., Suwon-si Gyeonggi-do (KR)
(74) Representative: Waddington, Richard

(57) **Abstract**

A method of and apparatus for automatically selecting a service appropriate to a user according to the physiological state of the user. The method of automatically selecting a service that is received from the user terminal, according to the result of measured physiological information of the user, includes measuring physiological information of the user determining the physiological state of the user based on the measured physiological information if a user input is not entered for a predetermined period of time selecting one service from among a plurality of services being received and performing operations corresponding to the selected service according to a determined physiological state and updating previously stored physiological information by reflecting the measured physiological information in the previously stored physiological information. Accordingly, the service can be automatically selected according to the physiological state of the user, even when the user cannot operate the user terminal, such as when driving.

## Description

An embodiment of the present invention relates to automatically selecting a service of a digital broadcasting system, and more particularly, to a method of and apparatus for automatically selecting a service according to the physical state of a user.

As the functions of telecommunication terminals become diversified, user terminals, such as mobile phones and personal digital assistants (PDAs) including functions to measure the sugar level of blood, heart pulse rate, body temperature, etc., have started to be introduced in the market. For example, there is a diabetes phone with a function to measure the sugar level of blood, a mobile phone that measures a heart pulse rate and lets a user know the results, a mobile phone that measures the level of stress and informs a user of the results, and so on.

A sensor for measuring, for example, the heart pulse rate of a user is included even in conventional mobile phones, PDAs, or music reproducing devices. The measured results are communicated to the user or music is selected according to the measured results. However, such conventional devices only display the measured results, or select music data from among music data stored in a memory or a storing medium, and read and reproduce the music, and do not automatically select a channel or a service that is being broadcasted in real-time.

The present invention provides a method of and apparatus for measuring physiological information such as the body temperature, heart pulse rate, amount of perspiration or sweat, etc. of a user, determining the physiological state of the user using the measured results, and accordingly automatically selecting a service being broadcasted.

According to the present invention there is provided an apparatus and method as set forth in the appended claims. Preferred features of the invention will be apparent from the dependent claims, and the description which follows.

According to an aspect of the present invention, there is provided a method of automatically selecting a service that is received from a user terminal, according to a result of measured physiological information of a user. The method comprises measuring physiological information of the user, determining a physiological state of the user based on the measured physiological information if a user input is not entered for a predetermined period of time, selecting one service from among a plurality of services being received and performing operations corresponding to the selected service according to the determined physiological state, and updating previously stored physiological information by reflecting the measured physiological information in the previously stored physiological information.

According to another aspect of the present invention, there is provided an apparatus to automatically select a service that is received from a user terminal, according to a result of measured physiological information of a user. The apparatus comprises a physiological information measuring unit to measure physiological information of the user, a determining unit to determine a physiological state of the user based on the measured physiological information if a user input is not entered for a predetermined period of time, a fast information channel decoder to interpret received service characteristics information to search for one service among a plurality of received services, according to the determined physiological state of the user, and a channel selecting unit to tune and reproduce a selected channel according to the interpretation result of the fast information channel decoder.

According to another aspect of the present invention, there is provided a user terminal to automatically select a service that is received according to a result of measured physiological information of a user. The user terminal comprises a digital audio broadcasting data processing unit to receive and process digital audio broadcasting data, a physiological information measuring unit to measure physiological information of the user, a determining unit to determine a physiological state of the user based on the measured physiological information if a user input is not entered for a predetermined period of time, a fast information channel decoder to interpret received service characteristics information to search one service from among a plurality of received services, according to the determined physiological state of the user, and a channel selecting unit to tune and reproduce a selected channel according to the interpretation result of the fast information channel decoder.

According to anther aspect of the present invention, there is provided a computer readable storage for controlling a device according to a method of automatically selecting a service that is received from a user terminal, according to a result of measured physiological information of a user. The method comprises measuring physiological information of the user, determining a physiological state of the user based on the measured physiological information if a user input is not entered for a predetermined period of time, selecting one service from among a plurality of services being received and performing operations corresponding to the selected service according to the determined physiological state, and updating previously stored physiological information by reflecting the measured physiological information in the previously stored physiological information.

Additional aspects and/or advantages of the invention will be set forth in part in the description which follows and, in part, will be apparent from the description, or may be learned by practice of the invention.

For a better understanding of the invention, and to show how embodiments of the same may be carried into effect, reference will now be made, by way of example, to the accompanying diagrammatic drawings in which:
FIG. 1 is a view illustrating a relationship of components of ensembles and services, and a fast information group (FIG) that has information on each component stored therein, according to an embodiment of the present invention;
FIG. 2 is a flowchart of a method of automatically selecting a service according to an embodiment of the present invention;
FIG. 3 is a flowchart of an example of automatically selecting a service according to the body temperature and heart pulse rate;
FIG. 4 is a structural diagram of a digital audio broadcasting (DAB) transmission frame;
FIG. 5 is a structural diagram of a fast information block (FIB);
FIG. 6 is a structural diagram of a FIG type 0;
FIG. 7 is a structural diagram of a FIG 0/1;
FIG. 8 is a structural diagram of a FIG 0/2;
FIG. 9 is a structural diagram of service components of a FIG 0/3 in a packet mode;
FIG. 10 is a structural diagram of a FIG 1/0 having an ensemble label, according to an embodiment of the present invention;
FIG. 11 is a structural diagram of a FIG 1/1 having a program service label, according to an embodiment of the present invention;
FIG. 12 is a structural diagram of a FIG 1/4 having a program service component label, according to an embodiment of the present invention;
FIG. 13 is a structural diagram of a FIG 1/5 having a data service label, according to an embodiment of the present invention; and
FIG. 14 is a block diagram of an apparatus for automatically selecting a service according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

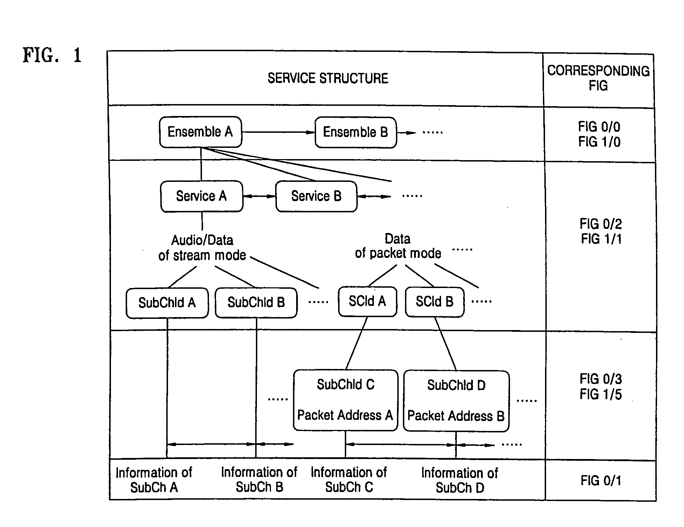

FIG. 1 is a view illustrating a relationship of components of ensembles and services, and a fast information group (FIG) that has information on each component stored therein, according to an embodiment of the present invention. The FIG is a group of data used in one application in a fast information channel (FIC). Referring to FIG. 1, since a plurality of service components exist in one service, it can be seen that there are a plurality of applications that are transmitted by being included in a sub-channel corresponding to a sub-channel identification (ID) SubChId or a service component ID SCId. Such service structure in digital audio broadcasting (DAB) will be described through the fast information channel (FIC). The channel, through which the service the user has selected is being transmitted, is determined by using multiplex configuration information (MCI) included in the FIC. The service the user desires is received and displayed using information on the size of the channel (i.e., information on a sub-channel). The FIG composes a fast information block (FIB), which composes the FIC, and once each FIG is interpreted, information on ensemble, service, service components, channels, and so on are known.

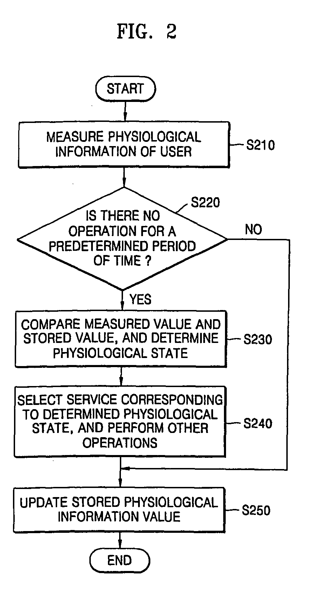

FIG. 2 is a flowchart of a method of automatically selecting a service according to an embodiment of the present invention. When the user operates a button to turn on the power of a user terminal or to select a service, physiological information of the user is measured through a sensor embedded in the button (Operation S210). Examples of a user terminal include a personal digital assistant (PDA), a digital audio broadcasting (DAB) or digital multimedia broadcasting (DMB) receiver, or any other device that can receive digital broadcasting. Examples of physiological information include heart pulse rate, body temperature, and levels of sweat, such as the level of moisture on the hands. Therefore, the button of the user terminal of the present invention has a sensor embedded therein to measure such physiological information.

Next, the user terminal is checked to see whether it does not operate for a predetermined period of time (Operation S220). For example, when the user does not operate any button within a predetermined period of time after turning on the power of the user terminal, it is determined that the user is not willing to choose a service and desires a service appropriate to the user's physiological state to be automatically selected. On the other hand, when the user operates a music-selecting (tuning) button within a predetermined period of time, a service the user selects is reproduced, and the physiological information measured in Operation S210 is updated (Operation S250).

If the user terminal comes into an automatic selecting mode, previous physiological information stored in, for example, a register and presently measured physiological information are compared, and a current state of the user is determined (Operation S230). Each measured item of the previous physiological information may be respectively compared with each measured item of the present physiological information, or one general value of physiological information obtained by combining the values of the measured items may be compared with one general value of the present physiological information obtained in the same way. Since the previously stored physiological information is continually updated, a value corresponding to mean physiological information of the user in a normal state is stored. In other words, the physiological information is accumulated in addition to the information measured previously, and then the mean value is calculated and stored.

In an example of determining the physiological state, if the previously stored heart pulse rate is 80 and the currently measured heart pulse rate is 100, it is determined that the user is in an agitated state. In another example, it can be determined that the user is in an agitated state only when both values of the heart pulse rate and body temperature, which are simultaneously checked, are higher than the previous values. Conversely, it can be determined that the user is in a drowsy or tired state if the current measured heart pulse rate is 60. There are other states besides the two states mentioned previously, which can be obtained by dividing the measured physiological information value into numerous states. For example, the physiological state can be divided into drowsy, tired, slightly agitated, and highly agitated states. The user terminal not only compares the measured physiological information to the already accumulated and stored physiological information, but also may determine the physiological state by comparing the measured physiological information to predetermined physiological information according to a separate already-provided standard. In another example, the physiological state may be determined according to numerous algorithms.

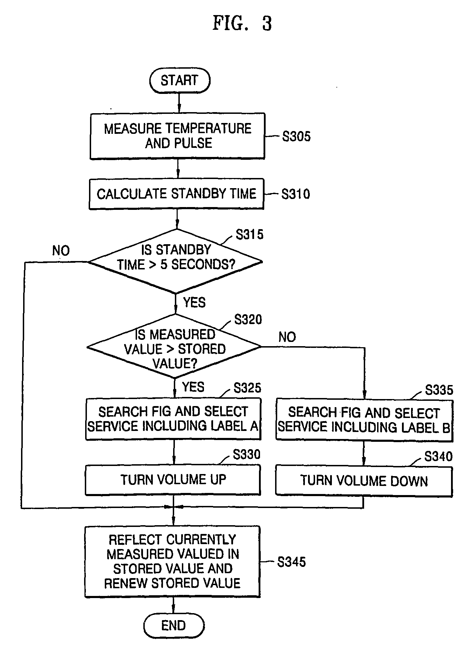

Then, a service corresponding to the determined physiological state of the user is selected and other operations are performed (Operation S240). For example, if the user is determined to be in an agitated state, a service to calm down the user is selected, and other operations such as lowering the volume may be performed, and if the user is determined to be in a drowsy or tired state, fast music or a service to lift the user's mood is selected, and other operations such as increasing the volume may be performed. Determining through which channel a service corresponding to the determined physiological state is being broadcasted and selecting that service will be described later with reference to FIG. 3. Afterwards, the currently measured physiological information is reflected in a mean value and is used to update the stored value (Operation S250).

FIG. 3 is a flowchart of an example of automatically selecting a service according to the body temperature and heart pulse rate, according to an embodiment of the present invention. The user's body temperature and heart pulse rate are measured through a sensor in a button (Operation S305). Standby time is counted to check whether there is no operation being performed for a predetermined period of time (Operation S310). For example, when the standby time is more than 5 seconds, the user terminal is determined to be in an automatic selection mode (Operation S315). The body temperature and heart pulse rate measured through such method are compared to the average body temperature and heart pulse rate already stored in the user terminal (Operation S320), and divided into state *A* and state *B*. State A indicates a stressed state or a state in which relaxation is required, and state *B* indicates a state opposite to state *A*.

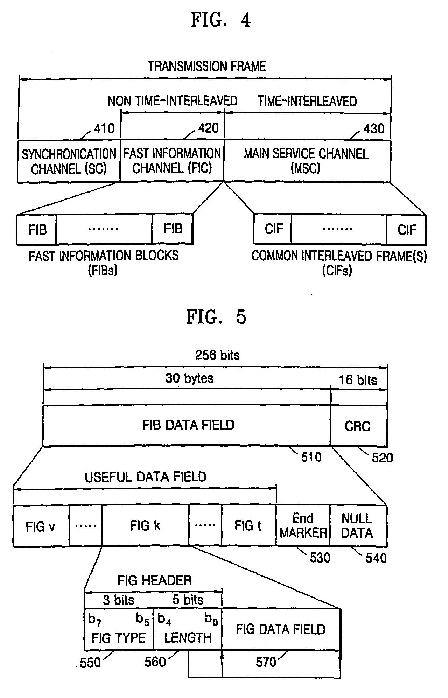

When the user is determined to be in state *A*, the user terminal searches to see whether a string corresponding to state *A* exists in a level transmitted inside a FIG (Operation S325). Examples of the string corresponding to state *A* include "classic, religion, Buddhism, Christ, and culture." When the user is determined to be in state *B*, the user terminal searches to see whether a string corresponding to state *B* exists within a level transmitted inside a FIG (Operation S335). Examples of the string corresponding to state *B* include "music, dance, song, and drama." In which FIG and the information on such strings are included and transmitted to the user terminal will be described below with reference to FIGS. 4 through 13.

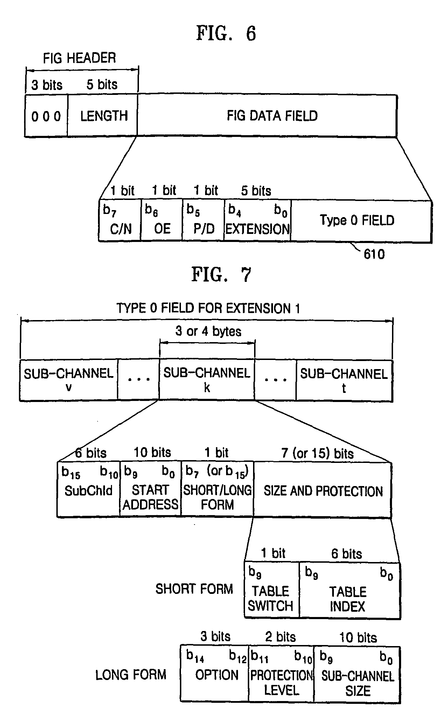

After finding the string through the above-mentioned method, information on a channel including that string is searched. That is, a service including a service ID SId of the service with the corresponding string is searched. The service information is included in FIG 0/2, which will be described later. The channel information, searched by the above-mentioned way, is transmitted to a channel selecting unit included in a FIG, which will be described with reference to FIGS. 7 through 9, tunes a corresponding channel, and reproduces the channel. The channel information interpreted by a FIC decoder, which interprets FIG, is transmitted to a channel selecting unit via a communication link (also referred to herein as a "modem") such as a serial communication bus (e.g., I²C bus), and the transmitted channel information has the following data structure. This data structure denotes structure information on a selected service.

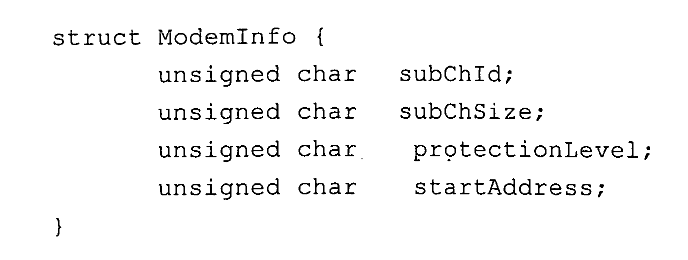

If the user is determined to be neither in state A nor state B, a default service is selected and reproduced. Besides the default service, favorite channel information may be stored so that a service the user has frequently selected may be selected.

When the user is determined to be in state A and an appropriate service to state *A* is selected, operations such as turning up the volume are performed (Operation S330). When the user is determined to be in state *B* and an appropriate service to state *B* is selected, operations such as turning down the volume are performed (Operation S340). Afterwards, the body temperature and heart pulse rate measured currently are reflected in the previously measured body temperature and heart pulse rate stored in a register, and updated (Operation S345).

FIG. 4 is a structural diagram of a digital audio broadcasting (DAB) transmission frame. The DAB transmission frame is composed of a synchronization channel (SC) 410, a fast information channel (FIC) 420, and a main service channel (MSC) 430.

The SC 410 is composed of a NULL symbol that can decide a transmission mode, and a reference symbol needed for orthogonal frequency division multiplexing (OFDM) symbol synchronization and carrier wave synchronization. The FIC 420 is a channel used in transmitting information (e.g., information on structure of a service, form that is multiplexed, and so on) needed for a receiving device to process data, or transmitting data that needs to be transmitted fast. The FIC 420 includes MCI, which has information on a structure of each sub-channel, service information, which is additional information on each service, and so on. Therefore, data of which service is being transmitted via the MSC 430 and which application uses the service is known when the FIC 420 is checked. In addition, data that needs to be transmitted fast within a predetermined period of time may also be included in FIC 420. For example, simple messages for emergency circumstances may be transmitted via FIC 420. FIB that composes FIC 420 will be described with reference to FIG. 5 below.

MSC 430 transmits real contents data provided by a service provider. MSC 430 may load part of FIC data when not enough space is available in FIC 420. However, MSC 430 cannot load FIC data that needs to be transmitted fast because time interleaving is applied in MSC 430 and some delay time is spent to decode the FIC data. A mode of transmitting data includes a stream mode or a packet mode. The stream mode is a mode in which only data, without an additional header, within a given sub-channel is transmitted at a fixed bit rate. The packet mode is a mode in which a header, besides data, is added and transmitted, thereby multiplexing numerous service components within a given sub-channel and transmitting the service components. Therefore, in the packet mode, a process to analyze a header of a packet is added to obtain service data included in MSC 430.

FIG. 5 is a structural diagram of FIB. The FIC is composed of a plurality of FIBs, and each FIB is composed of a FIB data field 510 and a cyclic redundancy check (CRC) field 520. The FIB data field 510 is 30 bytes, and the FIB data field 510 is again composed of FIGs. In the event the FIB data field 510 cannot be completely filled with FIG data, after inserting an end marker 530 in the FIB data field 510 to let the receiving device know that there is no more FIG data, null data 540 is padded and the size of FIB is enlarged into 256 bits. An example of the end marker 530 may be "111 11111." In each FIG, a FIG type field 550 that specifies the type of data included in the FIG data field 570 and a length field 560 that specifies the length of the FIG data field 570, are included in a FIG header, and the actual FIG data field 570 is included afterwards. The values of, for example, the FIG type field 550 and length field 560 may be different depending on the contents of the FIG data field 570.

FIG. 6 is a structural diagram of a FIG type 0. The FIG type 0 includes information on present and future multiplexing structure, multiplexing restructure, and time and other basic services. The FIG type 0 field 610 may have different information relative to each other according to the various extensions the type 0 may have.

FIG. 7 is a structural diagram of a FIG 0/1. The FIG 0/1, a detailed structural view of the FIG type 0 field 610 of FIG. 6, includes information on the structure of a sub-channel when the extension of the FIG type 0 is 1. That is, information to find the location of a sub-channel corresponding to a sub-channel ID SubChId corresponding to a searched service and to bring data is included. That is, each sub-channel includes sub-channel information composed of SubChId, start address, short/long form, and size and protection.

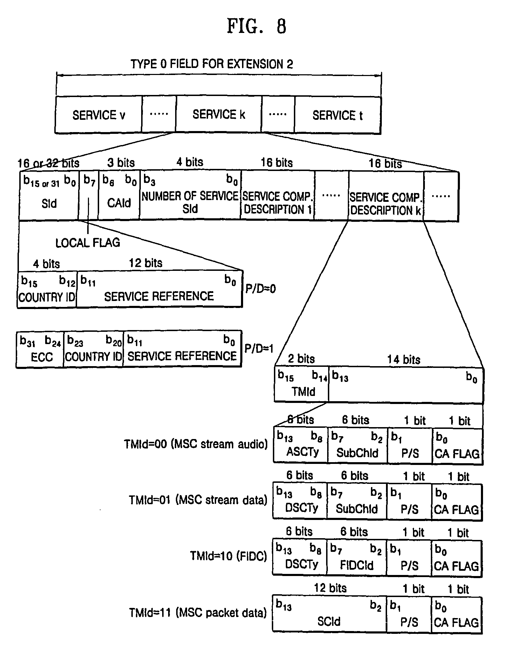

FIG. 8 is a structural diagram of a FIG 0/2. The FIG 0/2, which is a detailed structural view of the FIG type 0 field 610 of FIG. 6, includes information on service structure when the extension type of the FIG type 0 is 2. Description of a service applied in one service is included in one field (service field k).

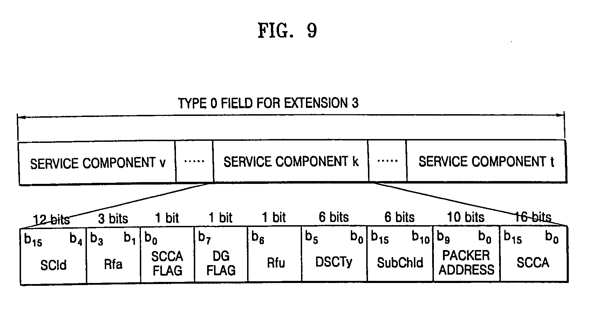

FIG. 9 is a structural diagram of service components of a FIG 0/3 in the packet mode. The FIG 0/3 includes information on the service components, in the packet mode. That is, FIG. 9 is a detailed view of information on service components corresponding to a service component ID SCId, which corresponds to the searched service components. Referring to FIG. 9, it can be seen that structural information of data corresponding to the service component ID SCId is included.

To select a service corresponding to the determined physiological state of the user, FIG including a service label, which is information on characteristics of a service, will be described below. The service label is information in the form of string that shows whether the service is, for example, drama, classical music, Christian broadcasting, sports broadcasting, or dance music. Examples of the service label include an ensemble label, a program service label, a program service component label, and a data service label.

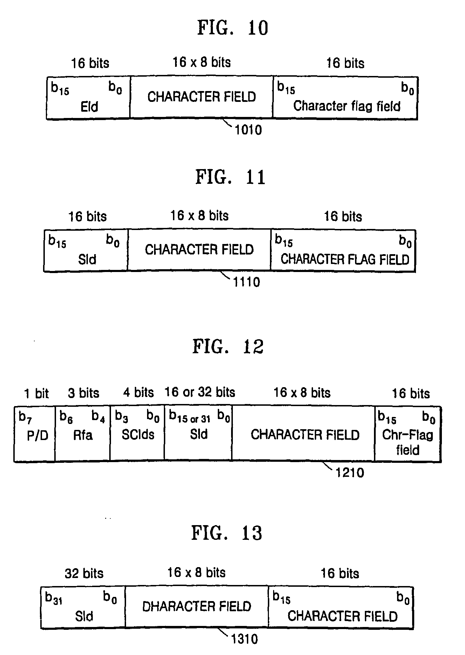

FIG. 10 is a structural diagram of a FIG 1/0 having the ensemble label, according to an embodiment of the present invention. A string showing the characteristics of an ensemble is stored in a character field 1010 of the FIG 1/0. That is, a "KBS" or "MBC" string is shown if it is a Korean Broadcasting System (KBS) or Munhwa Broadcasting Corporation (MBC) ensemble, respectively. Therefore, if the character field 101 of the FIG 1/0 is searched, the label of the ensemble may be known.

FIG. 11 is a structural diagram of a FIG 1/1 having the program service label, according to an embodiment of the present invention. A string that shows the characteristics of a program service is shown in a character field 1110 of the FIG 1/1. For example, if it is a classic service, a "classic" string is stored, and if it is a sports, news or dance music service, a "sports," "news," and "dance" string is stored, respectively.

FIG. 12 is a structural diagram of a FIG 1/4 having the program service component label, according to an embodiment of the present invention. A string indicating the characteristics of a service component composing a service is stored in a character field 1210 of the FIG 1/4. For example, a "traffic," "Buddhism," or "drama" string is stored if it is a traffic information, Buddhist broadcasting, or drama service component, respectively.

FIG. 13 is a structural diagram of a FIG 1/5 having the data service label, according to an embodiment of the present invention. A string that indicates the characteristics of data service is stored in a character field 1310 of FIG 1/5. Therefore, a string corresponding to SId can be found if the character field 1310 is searched.

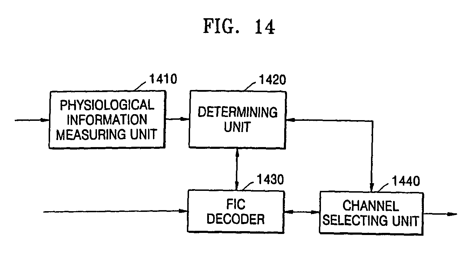

FIG. 14 is a block diagram of an apparatus for automatically selecting a service according to an embodiment of the present invention. The apparatus for automatically selecting the service comprises a physiological information measuring unit 1410, a determining unit 1420, a FIC decoder 1430, and a channel selecting unit 1440.

The physiological information measuring unit 1410 measures physiological information of the user such as body temperature and heart pulse rate. The body temperature and heart pulse rate are quickly measured at the very moment when the user operates the buttons of the user terminal. The determining unit 1420 measures the physiological state of the user based on the measured value. As one example, the determining unit 1420 compares the measured value with the stored mean value (normal value) and determines the physiological state of the user. According to the determined physiological state, the determining unit 1420 controls the channel selecting unit 1440. The FIC decoder 1430 interprets FIC and finds a string corresponding to the physiological state determined at the determining unit 1420. The channel selecting unit 1440 selects a service channel found by the determining unit 1420 and reproduces the service. The FIC decoder 1430 and the channel selecting unit 1420 are connected to each other via a modem, for example, an I2C bus.

If the user terminal is configured to include such apparatus for automatically selecting a service and a DAB data processing unit, a user terminal that automatically selects a service according to the physiological state of the user is possible. An example of the user terminal includes a DAB receiving device.

The above-mentioned method of automatically selecting a service can be embodied as a computer program. Codes and code segments that configure the program can be easily construed by computer programmers skilled in the art to which the present invention pertains. In addition, a program is stored in computer readable media a computer can read, and may be read by and operated by the computer, thereby executing the method of automatically selecting a service. Computer readable media includes magnetic recording media, optical recording media, and carrier wave media.

According to above-mentioned present invention, a service can be automatically selected according to the physiological state of a user even when the user cannot operate a user terminal, such as when driving, by adding a measuring unit that can measure physiological information in the user terminal.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of automatically selecting a service that is received from a user terminal, according to a result of measured physiological information of a user, the method comprising:
measuring physiological information of the user;
determining a physiological state of the user based on the measured physiological information if a user input is not entered for a predetermined period of time;
selecting one service from among a plurality of services being received and performing operations corresponding to the selected service according to the determined physiological state; and
updating previously stored physiological information by reflecting the measured physiological information in the previously stored physiological information.

2. The method of claim 1, wherein the measuring of the physiological information comprises measuring the physiological information of the user through a sensor of a button of the user terminal.

3. The method of claim 1 or claim 2, wherein the selecting of the one service and performing the operations corresponding to the selected service comprises:
searching a character field (1010) with a string related to a service recorded therein, the character field (1010) being included in a fast information channel of a digital audio broadcast, and finding a service that broadcasts a service corresponding to the determined physiological state of the user; and
operating the user terminal in accordance with the physiological state of the user.

4. The method of claim 3, wherein, in the searching of the character field (1010) and the finding of the service, the string related to the service is known by searching a character field (1010) comprising a label of a fast information group within the fast information channel.

5. The method of claim 3 or claim 4, wherein the operating of the user terminal in accordance with the physiological state of the user comprises turning the volume up or down according to the physiological state of the user.

6. A method of automatically selecting a digital audio broadcast, comprising:
measuring physiological information of a user; and
selecting a digital audio broadcast according to the measured physiological information of the user.

7. The method of claim 6, wherein the selecting of a digital audio broadcast comprises:
comparing the measured physiological information of the user to previous physiological information to determine a physiological state of the user.

8. An apparatus to automatically select a service that is received from a user terminal, according to a result of measured physiological information of a user, the apparatus comprising:
a physiological information measuring unit (1410) to measure physiological information of the user;
a determining unit (1420) to determine a physiological state of the user based on the measured physiological information if a user input is not entered for a predetermined period of time;
a fast information channel decoder (1430) to interpret received service characteristics information to search for one service among a plurality of received services, according to the determined physiological state of the user; and
a channel selecting unit (1440) to tune and reproduce a selected channel according to the interpretation result of the fast information channel decoder (1430).

9. The apparatus of claim 8, further comprising: a register to update previously stored physiological information by reflecting the measured physiological information in the previously stored physiological information, and storing the updated value.

10. The apparatus of claim 8 or claim 9, wherein the fast information channel decoder (1430) and the channel selecting unit (1440) communicate with each other through a modem.

11. The apparatus of any one of claims 8 to 10, wherein the physiological information measuring unit (1410) measures the physiological information of the user through a sensor of a button of the user terminal.

12. The apparatus of any one of claims 8 to 11, wherein the fast information channel decoder (1430) searches a character field (1010) with a string related to a service recorded therein, the character field (1010) being included in a fast information channel of a digital audio broadcast, and finds a service that is broadcasting a service corresponding to the determined physiological state, and operates the user terminal in accordance with the physiological state of the user.

13. The apparatus of claim 12, wherein the string related to the service is known by searching a character field (1010) comprising a label of a fast information group within the fast information channel.

14. The apparatus of any one of claims 8 to 13, wherein the user terminal is a digital audio broadcast receiving device.

15. A user terminal to automatically select a service that is received according to a result of measured physiological information of a user, the user terminal comprising:
a digital audio broadcasting data processing unit to receive and process digital audio broadcasting data;
a physiological information measuring unit (1410) to measure physiological information of the user;
a determining unit (1420) to determine a physiological state of the user based on the measured physiological information if a user input is not entered for a predetermined period of time;
a fast information channel decoder (1430) to interpret received service characteristics information to search one service from among a plurality of received services, according to the determined physiological state of the user; and
a channel selecting unit (1440) to tune and reproduce a selected channel according to the interpretation result of the fast information channel decoder (1430).

16. A computer readable storage medium for controlling a device according to a method of automatically selecting a service that is received from a user terminal, according to a result of measured physiological information of a user, the method comprising:
measuring physiological information of the user;
determining a physiological state of the user based on the measured physiological information if a user input is not entered for a predetermined period of time;
selecting one service from among a plurality of services being received and performing operations corresponding to the selected service according to the determined physiological state; and
updating previously stored physiological information by reflecting the measured physiological information in the previously stored physiological information.

17. An apparatus to automatically select a digital audio broadcast, comprising:
a digital audio broadcast receiving unit including a physiological information measuring unit (1410) to measure physiological information of a user; and
a determining unit (1420) to determine a physiological state of the user based on the measured physiological information, wherein
the digital audio broadcast receiving unit selects a digital audio broadcast based on the user's physiological state.

18. The apparatus of claim 17, wherein the physiological information of the user comprises at least one of a heart pulse rate, a body temperature, and a level of perspiration.

19. The apparatus of claim 17 or claim 18, wherein the digital audio broadcast receiving unit performs at least a second operation based the user's physiological state in addition to selecting a digital audio broadcast.

20. The apparatus of claim 19, wherein the at least a second operation comprises adjusting the volume of the digital audio broadcast.
